# FASCICULE DE BREVET EUROPEEN

(11) **EP 0 845 235 B1**
(45) Date de publication et mention de la délivrance du brevet: **30.07.2003**
(21) Numéro de dépôt: 97420219.4
(22) Date de dépôt: 26.11.1997
(51) Int. Cl.: A47J 37/08

(54) **Grille-pain système de remontée complémentaire pour chariot porte pain**
Toaster mit einem komplementären System zum Heben des Brotschlittens
Toaster with a complementary system for lifting the bread carriage

(30) Priorité: 27.11.1996 FR 9614771
(43) Date de publication de la demande: 03.06.1998
(73) Titulaire: SEB S.A., 69130 Ecully (FR)
(72) Inventeur: Antoine, Dominique, 88120 Cleurie (FR); Rousseau, Alain, 88120 Le Syndicat (FR)

(56) Documents cités:
- FR-A- 2 235 566
- FR-A- 2 729 285
- GB-A- 1 573 012
- GB-A- 2 236 944
- US-A- 5 522 306

## Description

La présente demande de brevet se rapporte au domaine technique général des grille-pain.

L'invention concerne plus particulièrement les grille-pain pourvus d'un système à remontée complémentaire pour chariot porte-pain.

De tels systèmes permettent de récupérer plus facilement des tranches de pain de petite taille après les opérations de grillage. Un chariot porte-pain peut alors être remonté sur une course complémentaire, pour se rapprocher davantage d'une zone de préhension des tranches de pain.

Il est connu de réaliser des grille-pain comportant un bâti pourvu d'une fente d'introduction débouchant dans une chambre de cuisson, des éléments chauffants agencés au voisinage de la chambre de cuisson, un chariot porte-pain déplaçable dans ladite chambre de cuisson et prolongé d'un bras d'actionnement pour positionner ledit chariot à trois niveaux distincts, au moins une tige de guidage pour optimiser le déplacement du chariot, un moyen de blocage pour positionner le chariot à un niveau bas correspondant à une position de grillage, et un moyen de rappel associé au chariot, pour ramener ce dernier vers un niveau intermédiaire correspondant à une position de repos.

On connaît ainsi, par l'intermédiaire du document GB-A-2 236 944, un système de remontée complémentaire pour chariot porte-pain comprenant un système de deux têtes de chariot montées sur des rails et mobiles l'une par rapport à l'autre. L'une des têtes présente un bras de commande permettant d'entraîner la seconde, laquelle est reliée au bâti par l'intermédiaire d'un ressort de rappel. Ce même chariot est également pourvu d'un moyen d'accrochage pour bloquer le chariot porte-pain, et plus particulièrement la partie supportant les tranches de pain, dans une position basse de grillage.

Un tel système présente un certain nombre d'inconvénients, et notamment un nombre de pièces important.

A ceci s'ajoute une configuration complexe des éléments constitutifs de ce système. Les configurations spécifiques supposent des dimensions particulières et précises, ce qui augmente d'une part les difficultés lors du montage ou de l'assemblage dudit grille-pain et d'autre part le coût de fabrication.

L'objet de la présente invention vise donc à réduire le nombre de pièces nécessaires à la réalisation du grille-pain, de manière à augmenter le degré d'automatisation de son assemblage.

Un autre objet de la présente invention vise à diminuer le temps nécessaire à la fabrication d'un tel grille-pain, et par conséquent son coût de fabrication.

La présente invention a également pour but de simplifier la configuration des pièces constitutives du grille-pain.

Les objets assignés à la présente invention sont atteints à l'aide d'un moyen de rappel constitué d'un ressort à spires jointives, monté sur le chariot et sur le bâti, le ressort à spires jointives présentant à l'une de ses extrémités un évasement supportant le chariot, de façon à autoriser, à l'aide du bras d'actionnement, un déplacement complémentaire du chariot vers un niveau supérieur, situé au-delà du niveau intermédiaire.

D'autres particularités et avantages de la présente invention ressortiront mieux à la lecture de la description faite ci-après, en référence aux dessins annexés, donnés à titre d'exemples non limitatifs, dans lesquels :
- La figure 1 représente une vue en perspective du grille-pain conforme à l'invention.
- La figure 2 représente un détail, et en particulier le système de remontée complémentaire du grille-pain conforme à l'invention.
- La figure 3 représente une variante de réalisation du système à remontée complémentaire du grille-pain conforme à l'invention.
- La figure 4 représente une variante additionnelle de réalisation du système de remontée complémentaire du grille-pain conforme à l'invention.

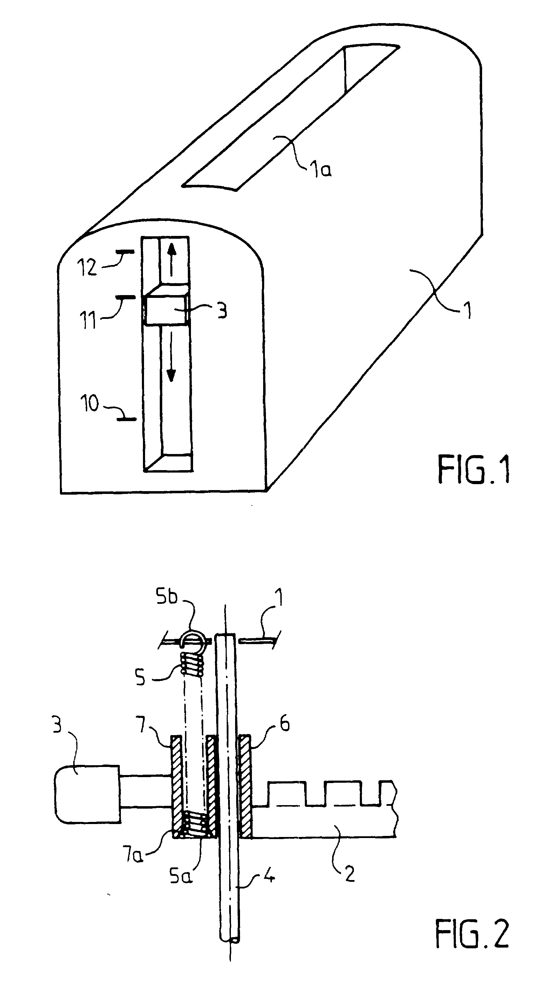

La figure 1 montre une vue extérieure du grille-pain conforme à l'invention. On aperçoit une fente d'introduction la, ménagée dans la partie supérieure dudit bâti 1 et par laquelle on introduit les articles destinés au grillage.

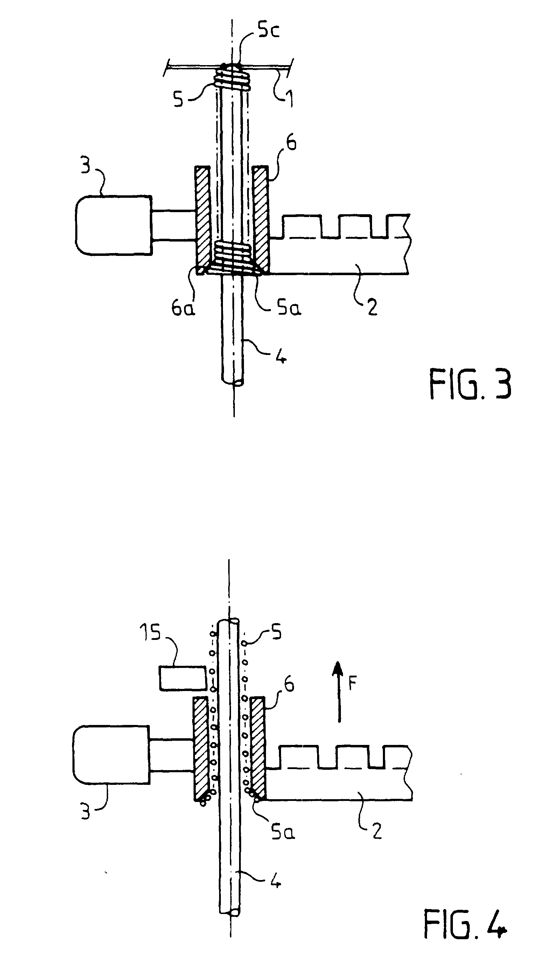

Le grille-pain conforme à l'invention comporte également un bras d'actionnement 3 mobile verticalement vers le bas et vers le haut. Le bras d'actionnement 3 est solidaire d'un chariot 2 porte-pain illustré partiellement aux figures 2 et 3.

Le bras d'actionnement 3 permet de déplacer le chariot 2 porte-pain à l'intérieur de la chambre de cuisson et plus précisément de positionner ledit chariot 2 à trois niveaux distincts, à savoir un niveau bas 10 correspondant à une position de grillage, un niveau intermédiaire 11 correspondant à une position de repos, et un niveau supérieur 12 correspondant à une position de remontée complémentaire.

L'obtention de cette position, située au niveau supérieur 12, permet, par exemple après une opération de grillage, d'évacuer plus facilement les petites tranches de pain, sans avoir à introduire les doigts ou des ustensiles tels que des fourchettes ou des couteaux dans la fente d'introduction 1a.

Ceci permet notamment d'éviter des risques de brûlures ou d'électrocution de l'utilisateur du grille-pain.

Les figures 2 et 3 montrent des exemples de réalisation d'un système de remontée complémentaire permettant par conséquent au chariot 2 d'atteindre une position au-delà de la position de repos.

Un nombre de pièces minimal, ainsi que des pièces constitutives du chariot 2 et du grille-pain, simplifiées à l'extrême, permettent de manière tout à fait inattendue de réaliser un système à remontée complémentaire dont le fonctionnement est totalement fiable.

Le grille-pain conforme à l'invention comporte à cet effet un ressort à spires jointives 5, monté sur le chariot 2 et sur le bâti 1. Le bâti 1 est également pourvu d'au moins une tige de guidage 4, pour assurer un déplacement optimal du chariot 2. Ce dernier est positionné au niveau bas 10, lors d'opérations de grillage, à l'aide d'un moyen de blocage non représenté aux figures.

Le moyen de blocage permet de maintenir le chariot 2 au niveau bas 10, en s'opposant à la force de rappel du ressort à spires jointives 5. Ce dernier entraîne le chariot 2 vers la position de repos, située au niveau intermédiaire 11, grâce à sa force de rappel qu'il exerce sur ledit chariot 2, lorsque le moyen de blocage est désactivé, par exemple à la fin d'une opération de grillage.

La position de repos pour le chariot 2 correspond à un état de repos pour le ressort à spires jointives 5, ou plus précisément à un état ou aucune force d'extension n'est exercée sur ledit ressort, chaque spire étant serrée contre des spires adjacentes dudit ressort 5.

Avantageusement, le chariot 2 présente une partie cylindrique 6, traversée par la tige de guidage 4, pour assurer le déplacement optimal dudit chariot 2. La partie cylindrique 6 est de préférence une pièce en plastique moulée, et rapportée ou montée sur le chariot 2 par tous moyens connus.

Le ressort à spires jointives 5 présente préférentiellement à l'une des ses extrémités un évasement 5a supportant le chariot 2.

Le ressort 5 est également fixé sur le bâti 1 avec son autre extrémité. Cette dernière peut être constituée d'une boucle 5b pour réaliser un moyen de maintien, de fixation ou d'accrochage.

L'évasement 5a est obtenu en élargissant légèrement les spires jointives du ressort 5, de façon à réaliser un rebord contre lequel vient s'appuyer une partie cylindrique complémentaire 7, ménagée dans ou rapportée sur le chariot 2. Le diamètre de la partie cylindrique complémentaire 7 est choisi avantageusement en fonction des dimensions du ressort à spires jointives 5.

La partie cylindrique complémentaire 7 présente à son extrémité venant en contact avec l'évasement 5a, une contreforme 7a, conjuguée audit évasement 5a. Une telle coopération entre l'évasement 5a et la contreforme 7a permet d'obtenir un appui homogène du chariot 2 sur l'évasement 5a.

On peut ainsi obtenir, en partant de la position de repos du chariot 2, un coulissement dudit chariot 2 le long de la tige de guidage 4 et du ressort à spires jointives 5. Les jeux mécaniques entre les parties cylindriques 6, 7 et respectivement la tige de guidage 4 et le ressort à spires jointives 5 garantissent un coulissement sans heurt et sans accrochage du chariot 2, par l'intermédiaire d'une manipulation du bras d'actionnement 3.

Partant de sa position de repos, le ressort à spires jointives 5 ne peut plus être comprimé et la partie cylindrique complémentaire 7, et plus précisément la contreforme 7a, vient se dégager de l'évasement 5a, pour s'élever vers la position de remontée complémentaire située au niveau supérieur 12.

Dans la variante de réalisation du grille-pain conforme à l'invention, représentée à la figure 3, la partie cylindrique 6, la tige de guidage 4 et le ressort à spires jointives 5 sont montés de façon coaxiale dans le bâti 1.

Le chariot 2, représenté à la figure 3, est ainsi pourvu de la partie cylindrique 6, laquelle est traversée par le ressort à spires jointives 5 et par la tige de guidage 4.

La tige de guidage 4 présente un diamètre inférieur au diamètre du ressort à spires jointives 5. Une extension coaxiale dudit ressort 5, le long de ladite tige de guidage 4, est ainsi permise.

La partie cylindrique 6 repose également sur l'évasement 5a, en présentant une forme conjuguée 6a à son extrémité en appui sur le ressort 5.

Le ressort à spires jointives 5 présente un rétrécissement 5c, à l'extrémité opposée à l'évasement 5a. La fixation sur le bâti 1 du ressort 5 est assurée par un serrage ou un blocage avec l'extrémité de la tige de guidage 4, laquelle est également maintenue ou bloquée par le bâti 1. La remontée complémentaire du chariot 2 ne se trouve nullement gênée, dans la mesure où la partie cylindrique 6 coulisse le long d'une paroi rigide et uniforme que constitue la périphérie extérieure du ressort à spires jointives 5 au repos.

Selon une variante de réalisation du ressort à spires jointives 5, représentée à la figure 2, la boucle 5b peut avantageusement être remplacée par un rétrécissement 5c des dernières spires dudit ressort 5, pour présenter une forme conique, dans laquelle est vissée une vis dont le pas est choisi de façon adéquate. Dans cet exemple de réalisation, le ressort à spires jointives 5 et la tige de guidage 4 sont montés selon des axes distincts dans le bâti 1.

L'extrémité du ressort à spires jointives 5 peut éventuellement traverser un perçage ménagé dans le bâti 1 non représenté aux figures.

Un avantage du grille-pain conforme à la présente invention réside dans l'utilisation du ressort à spires jointives 5.

En effet, lorsque le chariot 2 repose sur l'évasement 5a du ressort 5, il est nécessaire d'exercer un effort minimum, d'une intensité donnée, pour obtenir une élongation ou un décollement des spires du ressort 5.

Le ressort à spires jointives 5 présente donc une précontrainte. Cette caractéristique intrinsèque du ressort 5 est choisie pour stabiliser le chariot 2 dans sa position de repos.

Ainsi, la mise en place de tranches de pain sur le chariot porte-pain 2 ne provoque pas un abaissement dudit chariot 2 avant une manipulation du bras d'actionnement 3. La force minimale nécessaire à obtenir un début d'élongation du ressort 5 est déterminée par un choix judicieux des caractéristiques du ressort à spires jointives 5.

Selon une autre variante de réalisation du grille-pain conforme à l'invention, représentée à la figure 4, le chariot 2 est associé à un mécanisme d'arrêt 15 permettant de bloquer le chariot 2 au niveau intermédiaire 11, lors de sa remontée.

A cet effet, la partie cylindrique 6 est montée sur le ressort 5, lequel présente des spires écartées pour exercer une force de rappel F sur le chariot 2. En agissant sur le mécanisme d'arrêt 15, l'utilisateur permet au chariot de remonter vers le niveau supérieur 12, par l'intermédiaire de l'énergie emmagasinée dans le ressort 5. Ce dernier présente donc des spires jointives et se trouve dans son état de repos lorsque le chariot 2 se trouve au niveau supérieur 12.

Un autre avantage du grille-pain conforme à la présente invention, est obtenu par une automatisation accrue de l'assemblage dudit grille-pain.

Un avantage additionnel du grille-pain conforme à la présente invention réside dans l'obtention d'une fonction de relèvement complémentaire en réduisant d'une part le nombre de pièces constitutives dudit grille-pain, et d'autre part en simplifiant la configuration et la structure desdites pièces.

## Revendications

1. Grille-pain comportant un bâti (1) pourvu d'une fente d'introduction (1a) débouchant dans une chambre de cuisson, des éléments chauffants agencés au voisinage de la chambre de cuisson, un chariot (2) porte-pain déplaçable dans ladite chambre de cuisson et prolongé d'un bras d'actionnement (3) pour positionner ledit chariot (2) à trois niveaux distincts (10, 11, 12), au moins une tige de guidage (4) pour optimiser le déplacement du chariot (2), un moyen de blocage pour positionner le chariot (2) à un niveau bas (10) correspondant à une position de grillage, et un moyen de rappel associé au chariot (2), pour ramener ce dernier vers un niveau intermédiaire (11) correspondant à une position de repos, le moyen de rappel étant constitué d'un ressort à spires jointives (5) monté sur le chariot (2) et sur le bâti (1), **caractérisé en ce que** le ressort à spires jointives (5) présente à l'une de ses extrémités un évasement (5a) supportant le chariot (2), ledit ressort (5) étant également fixé sur le bâti (1) avec son autre extrémité, de façon à autoriser, à l'aide du bras d'actionnement (3), un déplacement complémentaire du chariot (2) vers un niveau supérieur (12), situé au delà du niveau intermédiaire (11).

2. Grille-pain selon la revendication 1, **caractérisé en ce que** le chariot (2) présente une partie cylindrique (6) traversée par la tige de guidage (4) pour assurer un déplacement optimal dudit chariot (2).

3. Grille-pain selon la revendication 2, **caractérisé en ce que** la partie cylindrique (6), la tige de guidage (4) et le ressort à spires jointives (5) sont montés de façon coaxiale dans le bâti (1).

4. Grille-pain selon la revendication 2, **caractérisé en ce que** le ressort à spires jointives (5) et la tige de guidage 4 sont montés selon des axes distincts dans le bâti (1).

## Patentansprüche

1. Toaster mit einem Gehäuse (1), das mit einem Einführungsschlitz (1a) versehen ist, der in eine Kochkammer mündet, Heizelementen, die in der Nähe der Kochkammer angeordnet sind, einem Brothalterschlitten (2), der in der Kochkammer verschiebbar ist und mit einem Betätigungsarm (3) verlängert ist, um den Schlitten (2) auf drei verschiedenen Niveaus (10, 11, 12) zu positionieren, wenigstens einem Führungsstift (4) zum Optimieren der Verschiebung des Schlittens (2), einem Blockierungsmittel zum Positionieren des Schlittens (2) auf einem niedrigen Niveau (10), das einer Röstposition entspricht, und einem Rückstellmittel, das dem Schlitten (2) zugeordnet ist, um diesen auf ein Zwischenniveau (11) zurückzubringen, das einer Ruhestellung entspricht, wobei das Rückstellmittel aus einer Feder (5) mit nebeneinanderliegenden Windungen gebildet ist, die an dem Schlitten und dem Gehäuse (1) angebracht ist, **dadurch gekennzeichnet, daß** die Feder (5) mit nebeneinanderliegenden Windungen an einem ihrer Enden eine Aufweitung (5a) aufweist, die den Schlitten (2) stützt, wobei die Feder (5) mit ihrem anderen Ende auch derart an dem Gehäuse (1) befestigt ist, daß mit Hilfe des Betätigungsarms (3) eine komplementäre Verschiebung des Schlittens (2) auf ein höheres Niveau (12) zugelassen ist, das jenseits des Zwischenniveaus (11) liegt.

2. Toaster nach Anspruch 1, **dadurch gekennzeichnet, daß** der Schlitten (2) einen zylindrischen Teil (6) aufweist, der von dem Führungsstift (4) durchsetzt wird, um eine optimale Verschiebung des Schlittens (2) zu gewährleisten.

3. Toaster nach Anspruch 2, **dadurch gekennzeichnet, daß** der zylindrische Teil (6), der Führungsstift (4) und die Feder (5) mit nebeneinanderligenden Windungen koaxial in dem Gehäuse (1) angebracht sind.

4. Toaster nach Anspruch 2, **dadurch gekennzeichnet, daß** die Feder (5) mit nebeneinanderliegenden Windungen und der Führungsstift (4) entlang unterschiedlicher Achsen in dem Gehäuse (1) angebracht sind.

## Claims

1. A toaster comprising a structure (1) provided with an insertion slot (1a) opening into a toasting chamber, heater elements arranged in the vicinity of the toasting chamber, a bread carriage (2) movable in said toasting chamber and extended by an actuator arm (3) for positioning said carriage (2) at three distinct levels (10, 11, 12), at least one guide rod (4) for optimizing displacement of the carriage (2), locking means for positioning the carriage (2) at a low level (10) corresponding to a toasting position, and return means associated with the carriage (2) to return it towards an intermediate position (11) corresponding to a rest position, the return means being constituted by a spring (5) having touching turns mounted on the carriage (2) and on the structure (1), the toaster being **characterized in that** the spring (5) having touching turns presents, at one of its ends, a flare (5a) supporting the carriage (2), said spring (5) also being fixed to the structure (1) via its other end so as to make it possible with assistance from the actuator arm (3) to move the carriage (2) further towards a high level (12) situated above the intermediate level (11).

2. A toaster according to claim 1, **characterized in that** the carriage (2) presents a cylindrical portion (6) through which the guide rod (4) passes in order to ensure proper displacement of the carriage (2).

3. A toaster according to claim 2, **characterized in that** the cylindrical portion (6), the guide rod (4), and the spring (5) having touching turns are mounted coaxially in the structure (1).

4. A toaster according to claim 2, **characterized in that** the spring (5) having touching turns and the guide rod (4) are mounted on distinct axes in the structure (1).
